# EUROPÄISCHE PATENTSCHRIFT

(11) **EP 1 936 247 B1**
(45) Veröffentlichungstag und Bekanntmachung des Hinweises auf die Patenterteilung: **05.08.2009**
(21) Anmeldenummer: 07019056.6
(22) Anmeldetag: 27.09.2007
(51) Int. Cl.: F16J 15/02, F16J 15/06, E04B 1/68

(54) **Dichtband aus weichem Schaumstoff**
Sealing tape made of soft foam
Bande d'étanchéité en mousse

(30) Priorität: 18.12.2006 EP 06026192
(43) Veröffentlichungstag der Anmeldung: 25.06.2008
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 0 072 955
- WO-A-98/45565
- DE-A1- 4 123 647
- US-A- 3 713 263
- US-A- 4 181 711
- US-A- 4 204 373
- US-A- 4 356 676

## Beschreibung

Die Erfindung betrifft ein Dichtband aus weichem Schaumstoff.

Dichtbänder aus weichem und flexiblem Schaumstoffmaterial werden in der Bautechnik zum Abdichten gegen Luftzug und Schlagregen eingesetzt. Für den Hausgebrauch durch den Endverbraucher gibt es die allgemein bekannten Schaumstoffbänder von in der Regel wenigen Millimetern Dicke, die einseitig mit einer von einer Abdeckfolie abgedeckten Selbstklebeschicht versehen sind und unkomprimiert auf Rollen gewickelt sind. Sie werden für die Abdichtung undicht gewordener Fenster und Türen zwischen Fenster- bzw. Türflügel und Fenster- bzw. Türrahmen eingesetzt. Hierzu werden sie an passender Stelle am Flügel oder am Rahmen angeklebt.

Im professionellen Hochbau werden Dichtbänder aus weichem und flexiblem Schaumstoff, die zumeist imprägniert sind, zwischen Fenster- und Türrahmen und einem Mauerwerk eingesetzt. Solche Dichtbänder können bis zu einigen Zentimetern dick sein und sind gewöhnlich einseitig mit einer Selbstklebeschicht versehen, mit der sie an den Rahmenprofilelementen von Fenstern und Türen angeklebt werden können. Dichtbänder dieser Art sind häufig mit einem Material imprägniert, das die Rückstellung des Schaumstoffmaterials aus einem komprimierten Zustand, in dem sie auf Rolle angeliefert werden, in einen entspannten Zustand verzögert, um die Montage des mit dem Dichtband versehenen Bauelements auf der Baustelle zu erleichtern.

Zur Verhinderung einer Dampfdiffusion werden Dichtbänder der vorgenannten Art benötigt, die mit einer Dampfsperre versehen sind. Aus DE 196 41 415 C2 ist ein Dichtband aus offenporigem Material in zu einer Scheibe aufgerollter Form zum Abdichten von Fugen oder Spalten gegen Luftzug und/oder Schlagregen bekannt, bei dem wenigstens eine Sperrschicht innerhalb des Dichtbandes in solcher Konfiguration angeordnet ist, dass sie und die angrenzenden offenporigen Bereiche in axialer Richtung aufgereiht sind. Die Sperrschicht verläuft also in radialer Richtung der Dichtbandrolle.

Die WO 98/45565 A zeigt ein Dichtband mit einem ablösbaren Folienüberzug, der das Dichtband im komprimierten Zustand an drei Seiten bedeckt, gemäß dem Oberbegriff des Anspruchs 1.

Der Erfindung liegt die Aufgabe zugrunde, ein mit einem Folienband ausgerüstetes Dichtband anzugeben, das sich einfach herstellen lässt.

Diese Aufgabe wird durch die Merkmale des Anspruchs 1 gelöst.

Erfindungsgemäß weist die Dichtbandrolle ein zum Wickel geformtes Weichschaumband rechteckigen Querschnitts auf, das zwei am Wickel außen liegende Seitenflanken, eine Oberseite und eine Unterseite hat, und mindestens ein Folienband, das wenigstens eine der Seitenflanken des Weichschaumbandes bedeckt. Das Folienband ist an zwei Abschnitten klebend mit dem Weichschaumband verbunden, wobei mindestens einer der Abschnitte an der Unterseite oder der Oberseite des Weichschaumbandes angeordnet ist und zwischen einander benachbarten Windungen innerhalb des Wickels liegt. Das Folienband weist im komprimierten zustand des weichschaumbandes ein durch eine Schlaufe gebildete Aufgehreserve auf.

Grundsätzlich lassen sich komprimiert und unkomprimiert gelieferte Dichtbänder aus weichem und flexiblem Schaumstoffmaterial unterscheiden. Die Erfindung lässt sich grundsätzlich bei beiden Lieferformen nahezu gleichermaßen anwenden.

Das Folienband ist entweder an wenigstens einer Seitenflanke angebracht oder mit wenigstens einem Randstreifen an der Unterseite des Schaumstoffbandes angeheftet, die üblicherweise dafür vorgesehen ist, das Dichtband an einem abzudichtenden Bauelement, etwa am Rahmenprofilelement eines Fensters oder einer Tür anzukleben. Diese Seite des Schaumstoffbandes kann mit einer Selbstklebeschicht versehen sein, die dann auch das Folienband festhält.

Das Folienband ist breit genug, sich auch im eingebauten Zustand des Bauelements, in dem das Schaumstoffband, das die Hauptkomponente des Dichtbandes bildet, teilentspannt ist, vollständig über die ihr benachbarte freiliegende Seitenflanke des Dichtbandes zu erstrecken.

Als Folienband ist an erster Stelle an eine Dampfsperrfolie gedacht. Das Folienband kann aber auch eine UV-Sperrfolie sein, die das von ihr bedeckte Schaumstoffmaterial gegen UV-Lichteinflüsse schützen soll. Auch Folien, die unter ästhetischen Gesichtspunkten ausgewählt sind, etwa metallisierte oder farbige Folien, sind denkbar. Ganz allgemein, die Erfindung kann mit jeder Art folienhaftem, biegeschlaffem Bandmaterial realisiert werden, das nach den individuellen Bedürfnissen ausgewählt ist, einschließlich textiler Materialien oder aus mehreren Schichten bestehenden Laminaten.

Ein bedeutender Vorteil des erfindungsgemäßen Dichtbandes besteht in einer bevorzugten Ausführungsform darin, dass ein voll bewegungsfähiges System geschaffen ist, bestehend aus einem weichen, elastischen Schaumstoffband und einem Folienband, wobei das Folienband so zu einer Schlaufe geformt ist, dass es sich über den gesamten Funktionsbereich des Dichtbandes bewegen kann. Beim Aufgehen des Weichschaumstoffbandes durch elastische Rückstellung nach Montage des damit ausgerüsteten Bauelements steht die durch die Schlaufe gegebene seitliche Bewegungsreserve des Folienbandes zur Verfügung, die verbraucht wird, ohne dass sich das Folienband dehnen muss.

Das erfindungsgemäße Dichtband ist in Form von schmalen Dichtbandrollen, wegen ihrer Abmessungen auch Dichtbandscheiben genannt, herstellbar, ohne dass hierfür eine spezielle Vorbereitung des Schaumstoffmaterials bei der Herstellung von Dichtbandscheiben, die vom allgemein Üblichen abweicht, erforderlich ist. Sie sieht vielmehr vor, solche Dichtbandscheiben nachträglich mit einer biegeschlaffen Folie, beispielsweise einer Dampfsperrfolie, in Form eines Folienbandes auszurüsten.

Hat das Dichtband beispielsweise eine Ausgangshöhe des Schaumstoffbandes von 30 mm und ist es im Wickel auf eine Höhe von 4 bis 5 mm zusammengedrückt, dann ist sein Einsatzbereich häufig vom Hersteller auf eine bestimmte Spaltbreite, z.B. auf 15 mm, begrenzt, die von dem Dichtband überbrückt werden soll. Denn man lässt das Schaumstoffmaterial nicht weiter entspannen, damit es an der Gebäudewand fest anliegt.

Der Funktionsbereich des Dichtbandes, der die zu wählende Folienbandbreite bestimmt, ist somit durch den Kompressionsumfang des Schaumstoffmaterials innerhalb des Wickels und die maximale Rückstellung des Schaumstoffmaterials nach Montage des damit ausgerüsteten Bauelements bestimmt. Die minimale Dicke nach Kompression von getränkten Schaumstoffen liegt derzeit bei etwa 10% der Originaldicke. Die Rückstellung nach Kompression erreicht die Originaldicke manchmal nicht mehr.

Für ein ausreichend sicheres Anheften des Folienbandes an das Schaumstoffmaterial des Dichtbandes reicht es, wenn zwei Abschnitte von mindestens 1-2 mm der Breite des Folienbandes klebend, vorzugsweise mittels einer Selbstklebeschicht, am Schaumstoffmaterial angeheftet werden.

Weitere Eigenschaften, Merkmale und Vorteile der Erfindung ergeben sich aus der detaillierten Beschreibung unter Bezugnahme auf die Zeichnungen, in denen schematisch einige Ausführungsbeispiele von erfindungsgemäßen Dichtbändern im Querschnitt dargestellt sind. Es zeigt:
- Fig. 1: eine erste Ausführungsform des erfindungsgemäßen Dichtbands im aufgewickelten, komprimierten Zustand;
- Fig. 2: das Dichtband aus Fig. 1 im teilkomprimierten Funktionszustand; und
- Fig. 3: eine zweite Ausführungsform des erfindungsgemäßen Dichtbands im aufgewickelten, komprimierten Zustand.

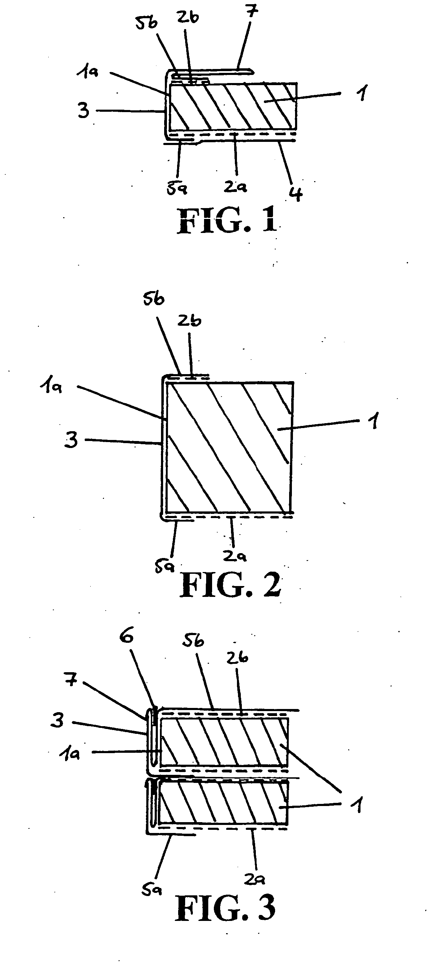

In allen Zeichnungen sind ein Schaumstoffband, eine Klebeschicht, das Folienband und teilweise die Abdeckfolie mit gegenseitigem Abstand dargestellt, um die Lage dieser Elemente im Bezug zueinander deutlich zu machen. Es sei daher betont, dass in Wirklichkeit die Elemente dicht aufeinander liegen, d.h. sich gegenseitig berühren und aufeinander gedrückt sind. Es ist weiter hervorzuheben, dass die Figuren stets den Querschnitt eines Dichtbandes zeigen, und zwar in den Figuren 1 und 3 in einem Zustand, wie er anzutreffen ist, wenn das Dichtband in komprimiertem Zustand auf einen Wickelkörper gewickelt ist.

In Fig. 1 erkennt man ein Schaumstoffband 1, das im komprimierten Zustand dargestellt ist. Es hat in dem gezeigten Zustand einen flachen, rechteckigen Querschnitt und ist an seiner einen Seite, die hier und bei allen nachfolgend erläuterten Beispielen als Unterseite bezeichnet werden soll, mit einer ersten Selbstklebeschicht 2a versehen, die gestrichelt eingezeichnet ist. An der Unterseite des Schaumstoffbandes 1 ist mittels der ersten Selbstklebeschicht 2a ein Abschnitt 5a eines Folienbandes 3 befestigt. Das Folienband 3 ist von dort aus seitlich über die Seitenflanke 1a nach oben um das Schaumstoffband 1 herumgelegt, auf der Oberseite des Schaumstoffbandes 1 als Schlaufe 7 ausgebildet und mit einem Abschnitt 5b, der im Bereich der Seitenflanke 1 a angeordnet ist, am Schaumstoffband 1 klebend befestigt. Die Verklebung des Abschnitts 5b erfolgt vorzugsweise mittels einer zweiten Selbstklebeschicht 2b, kann aber - ebenso wie die Verklebung im Abschnitt 5a - auch durch andere Klebmittel erfolgen.

In dem an der Selbstklebeschicht 2a haftenden Abschnitt 5a kann das Folienband 3 mit einer Vielzahl von Durchbrüchen oder Löchern versehen sein. An der Unterseite des Schaumstoffbandes 1 ist das Folienband 3 von einer Abdeckfolie 4 abgedeckt, um zu verhindern, dass die verschiedenen Lagen eines Wickels aneinander kleben. Die Durchbrüche oder Löcher in dem Folienband 3 sind ausreichend groß, dass durch Andrücken der Abdeckfolie 4 eine Haftung derselben durch Löcher des Folienbandes 3 hindurch an der Selbstklebeschicht 2a erzielt wird. Alternativ kann die Abdeckfolie 4 nur bis zum Abschnitt 5a reichen, wenn der Abschnitt 5a des Folienbandes 3 keine Durchbrüche aufweist.

Die Schlaufe 7 bildet die Aufgehreserve des Dichtbands und definiert gleichzeitig die maximale Ausdehnung. Aufgrund der Schlaufenform verschiebt sich das Folienband 3 beim Aufgehen des Schaumstoffs besonders leicht auf sich selbst.

Im vorliegenden Ausführungsbeispiel sind beide Abschnitte 5a, 5b des Folienbandes 3 an der Unterseite bzw. der Oberseite des Schaumstoffs verklebt und liegen damit im aufgerollten Zustand zwischen verschiedenen Lagen des Wickels. Es ist aber auch möglich, einen der beiden Abschnitte 5a, 5b am oberen bzw. unteren Rand der Seitenflanke 1 a anzukleben, solange die gesamte Seitenflanke 1 a vom Folienband 3 bedeckt bleibt.

Fig. 2 zeigt das Dichtband aus Fig. 1 im teilweise entspannten Funktionszustand.

Fig. 1 und 2 zeigen also die Wirkungsweise eines Dichtbandes nach der Erfindung. Fig. 1 zeigt den Zustand des Dichtbandes auf der Rolle, ohne die Rolle darzustellen. Diesen Zustand nimmt das Dichtband auch noch ein unmittelbar, nachdem man es von der Rolle gelöst hat, ein, sofern das Schaumstoffband 1 mit einer seine Rückstellung verzögernden Imprägnierung getränkt ist. Im weiteren Verlauf steht dann aufgrund der dem Schaumstoffmaterial innewohnenden, elastischen Rückstellkraft das Schaumstoffband 1 nach oben auf. Das hat zur Folge, dass sich das Folienband 3 im Bereich der Schlaufe 7 auf sich selbst abrollt und über die obere Kante rutscht, die die von dem Folienband 3 bedeckte Seitenflanke 1a mit der Oberseite des Schaumstoffbandes 1 verbindet. Am Ende der zulässigen Entspannung des Schaumstoffbandes 1 ist das Folienband 3 fast vollständig von der Oberseite des Schaumstoffbandes 1 abgerutscht (Fig. 2), wird aber an der Klebstelle im Abschnitt 5b festgehalten und bedeckt so die gesamte Seitenflanke 1a des Schaumstoffbandes 1. Dieser Zustand liegt beispielsweise vor, wenn ein mit dem Dichtband ausgerüstetes Rahmenbauelement in eine Gebäudeöffnung eingesetzt und durch das Dichtband an der Gebäudeöffnung abgedichtet ist. Es ist allerdings zu betonen, dass dann die Abdeckfolie 4 abgezogen ist, da das Dichtband mithilfe der Selbstklebeschicht 2a an dem betreffenden Rahmenbauelement angeklebt ist.

Fig. 3 zeigt zwei Lagen einer weiteren Ausführungsform des erfindungsgemäßen Dichtbands, bei der keine Abdeckfolie 4 notwendig ist. Bei dieser Ausführungsform klebt das Folienband 3 mit seinem Abschnitt 5b an der gesamten Oberseite des Schaumstoffs 1 und ist in diesem Bereich nach außen hin einseitig silikonisiert ausgestaltet, wodurch es die Funktion der Abdeckfolie 4 übernimmt. Das Folienband 3 kann etwas über die freie Seitenflanke überstehen.

Die Schlaufe 7 ist hier im Bereich der bedeckten Seitenflanke 1 a ausgebildet. Außerdem können die Schlaufen 7 dort mit einem verzögernd nachgebenden Klebstoff 6 verklebt sein, der es zulässt, dass sich das Schaumstoffband 1 entspannt, dies jedoch nur mit einer von dem genannten Klebstoff 6 bestimmten Geschwindigkeit. Außerdem erleichtert ein solcher Klebpunkt die Handhabung des Dichtbands, da die Schlaufen 7 nicht unerwünscht aufgehen können.

## Patentansprüche

1. Dichtbandrolle mit einem zum Wickel geformten Weichschaumband (1) rechteckigen Querschnitts, das zwei am Wickel außen liegende Seitenflanken (1a), eine Oberseite und eine Unterseite hat, und mit mindestens einem Folienband (3), das wenigstens eine der Seitenflanken (1a) des Weichschaumbandes (1) bedeckt,
**dadurch gekennzeichnet, dass**
das Folienband (3) an zwei Abschnitten (5a, 5b) klebend mit dem Weichschaumband (1) verbunden ist, wobei mindestens einer der Abschnitte (5a, 5b) an der Unterseite oder der Oberseite des Weichschaumbandes (1) angeordnet ist und zwischen einander benachbarten Windungen innerhalb des Wickels liegt, und dass das Folienband (3) im komprimierten Zustand des Weichschaumbandes (1) eine durch eine Schlaufe (7) gebildete Aufgehreserve aufweist.

2. Dichtbandrolle nach Anspruch 1, **dadurch gekennzeichnet, dass** an mindestens einem der Abschnitte (5a, 5b) die Verbindung durch eine Selbstklebeschicht (2a, 2b) gebildet ist.

3. Dichtbandrolle nach einem der vorhergehenden Ansprüche, **dadurch gekennzeichnet, dass** das Weichschaumband (1) innerhalb der Rolle elastisch rückstellfähig komprimiert ist.

4. Dichtbandrolle nach einem der vorhergehenden Ansprüche, **dadurch gekennzeichnet, dass** das Folienband (3) auf der Oberseite oder an der bedeckten Seitenflanke (1a) des Weichschaumbandes (1) zu mindestens einer Schlaufe (7) geformt ist, welche die Aufgehreserve bildet.

5. Dichtbandrolle nach Anspruch 4, **dadurch gekennzeichnet, dass** das Folienband (3) auf der Oberseite des Weichschaumbandes (1) in einem Bereich nahe der vom Folienband (3) bedeckten Seitenflanke (1a) am Weichschaumband (1) klebend befestigt ist.

6. Dichtbandrolle nach einem der vorhergehenden Ansprüche, **dadurch gekennzeichnet, dass** eine Abdeckfolie (4) die Unterseite des Weichschaumbandes (1) überdeckt.

7. Dichtbandrolle nach einem der Ansprüche 1 bis 3, **dadurch gekennzeichnet, dass** das Folienband (3) ein einseitig silikonisiertes Folienband ist, welches die Funktion einer Abdeckfolie übernimmt.

## Claims

1. Sealing tape reel comprising a flexible foam strip (1) of rectangular cross-section, which is shaped into a roll and has two side flanks (1a), an upper side and a lower side, located on the outside of the roll, and comprising at least one film strip (3) which covers at least one of the side flanks (1a) of the flexible foam strip (1), **characterised in that** two portions (5a, 5b) of the film strip (3) are adhesively connected to the flexible foam strip (1), at least one of the portions (5a, 5b) being arranged on the lower side or the upper side of the flexible foam strip (1) and lying between adjacent windings within the roll, and **in that** the film strip (3), in the compressed state of the flexible foam strip (1), comprises an expansion reserve formed by a loop (7).

2. Sealing tape reel according to claim 1, **characterised in that** the connection at at least one of the portions (5a, 5b) is formed by a self-adhesive layer (2a, 2b).

3. Sealing tape reel according to either of the preceding claims, **characterised in that** the flexible foam strip (1) is compressed within the reel so as to be resiliently resettable.

4. Sealing tape reel according to any one of the preceding claims, **characterised in that** the film strip (3) on the upper side or on the covered side flank (1a) of the flexible foam strip (1) is shaped into at least one loop (7) which forms the expansion reserve.

5. Sealing tape reel according to claim 4, **characterised in that** the film strip (3) on the upper side of the flexible foam strip (1) is adhesively fixed to the flexible foam strip (1) in a region close to the side flank (1a) covered by the film strip (3).

6. Sealing tape reel according to any one of the preceding claims, **characterised in that** a covering film (4) covers the lower side of the flexible foam strip (1).

7. Sealing tape reel according to any one of claims 1 to 3, **characterised in that** the film strip (3) is a film strip which is silicone-treated on one side and which performs the function of a covering film.

## Revendications

1. Rouleau de bande d'étanchéité comprenant une bande de mousse souple (1) enroulée de section transversale rectangulaire, laquelle bande présente deux flancs latéraux (1a) situés extérieurement sur l'enroulement, un côté supérieur et un côté inférieur, et comprenant au moins une bande de feuille (3), qui recouvre au moins l'un des flancs latéraux (1a) de la bande de mousse souple (1),
**caractérisé en ce que**
la bande de feuille (3) est assemblée de façon adhésive sur deux sections (5a, 5b) avec la bande de mousse souple (1), au moins l'une des sections (5a, 5b) étant disposée sur le côté inférieur ou sur le côté supérieur de la bande de mousse souple (1) et se situant entre des spires voisines les unes des autres à l'intérieur de l'enroulement, et que la bande de feuille (3) présente, dans l'état de compression de la bande de mousse souple (1), une réserve de gonflement formée par une boucle (7).

2. Rouleau de bande d'étanchéité suivant la revendication 1, **caractérisé en ce que** l'assemblage est formé par une couche autoadhésive (2a, 2b) sur au moins l'une des sections (5a, 5b).

3. Rouleau de bande d'étanchéité suivant l'une des revendications précédentes, **caractérisé en ce que** la bande de mousse souple (1) est comprimée à l'intérieur du rouleau avec une aptitude au rappel élastique.

4. Rouleau de bande d'étanchéité suivant l'une des revendications précédentes, **caractérisé en ce que** la bande de feuille (3) est formée en au moins une boucle (7) sur le côté supérieur ou sur le flanc latéral recouvert (1a) de la bande de mousse souple (1), laquelle boucle forme la réserve de gonflement.

5. Rouleau de bande d'étanchéité suivant la revendication 4, **caractérisé en ce que** la bande de feuille (3) est fixée de façon adhésive sur la bande de mousse souple (1) sur le côté supérieur de cette dernière, dans une zone proche du flanc latéral (1a) recouvert par la bande de feuille (3).

6. Rouleau de bande d'étanchéité suivant l'une des revendications précédentes, **caractérisé en ce qu'**une feuille de couverture (4) recouvre le côté inférieur de la bande de mousse souple (1).

7. Rouleau de bande d'étanchéité suivant l'une des revendications 1 à 3, **caractérisé en ce que** la bande de feuille (3) est une bande de feuille siliconée unilatéralement, qui assume la fonction d'une feuille de couverture.
